# EUROPÄISCHE PATENTSCHRIFT

(11) **EP 2 447 570 B1**
(45) Veröffentlichungstag und Bekanntmachung des Hinweises auf die Patenterteilung: **27.03.2013**
(21) Anmeldenummer: 11450130.7
(22) Anmeldetag: 12.10.2011
(51) Int. Cl.: F16H 1/32, F16H 57/12

(54) **Taumelgetriebe**
Swash-plate type gearing
Engrenage à plateau oscillant

(30) Priorität: 28.10.2010 AT 17852010
(43) Veröffentlichungstag der Anmeldung: 02.05.2012
(73) Patentinhaber: Puchhammer, Gregor, 1130 Wien (AT)
(72) Erfinder: Puchhammer, Gregor, 1130 Wien (AT)
(74) Vertreter: Rippel, Andreas

(56) Entgegenhaltungen:
- DE-A1- 3 739 238
- DE-U1-202006 010 049

## Beschreibung

Die Erfindung bezieht sich auf ein Taumelgetriebe, dessen auf einer Antriebswelle angeordneter Taumelkörper mit wenigstens einer Reihe von Kraftübertragungselementen, insbesondere Zahnkränzen versehen ist, die mit eingangsseitig und ausgangsseitig angeordneten sekundären Kraftübertragungselementen, insbesondere Zahnkränzen zusammenwirken. Ein derartiges Taumelgetriebe ist aus der DE 37 39 238 A1 bekannt.

Derartige bekannte Getriebe für hohe Untersetzungen basieren auf der Idee eines Differenzgetriebes, bei dem zwei Zahnkränze mit wenigen Zähnen Differenz gegeneinander verschoben werden. Dabei ist der erste Zahnkranz meist starr mit dem Gehäuse verbunden, wohingegen der zweite Zahnkranz mit der Antriebswelle verbunden ist.

Ziel der Erfindung ist insbesondere ein spielfreies oder fast spielfreies Getriebe zu erhalten.

Erreicht wird dies vor allem dadurch, dass die Antriebswelle geteilt ist, wobei der erste Teil der Antriebswelle über ein Lager axial fixiert im Gehäuse gelagert ist und der zweite Teil der Antriebswelle axial verschiebbar mit dem ersten Teil so verbunden ist, dass Drehmomente übertragbar sind, ferner der Taumelkörper auf dem axial verschiebbaren Teil der Antriebswelle angeordnet ist und der Winkel zwischen dem Taumelkörper und der Antriebswellenachse veränderbar ist.

Durch die Verschwenkung des Taumelkörpers werden die Zahnkränze des Taumelkörpers auf beiden Seiten in die korrespondierenden Verzahnungen gedrückt. Die jeweils im Eingriff stehenden Zahnflanken der korrespondierenden Zahnräder kontaktieren daher auf beiden Seiten eines Zahnes, wodurch das Zahnspiel zwischen den Zahnflanken beider Räder gegen Null geht.

Die Verschwenkung des Taumelkörpers kann als Kompensation für auftretende Fertigungstoleranzen herangezogen werden, um das Zahnspiel an den Eingriffspunkten der Zahnräder im Getriebe zu minimieren oder ganz zu unterbinden. Wird der Taumelkörper in die andere Schwenkrichtung bewegt, und dadurch der Taumelwinkel verkleinert, geraten die Zahnflanken außer Kontakt. Dies bewirkt ein Auskuppeln des Taumelkörpers und damit ein Auskuppeln der Abtriebsachse.

Weiters kann durch die Messung des Taumelwinkels oder die Messung der Änderung des Taumelwinkels ein Messwert ermittelt werden, der als Maß für das im Getriebe übertragene Drehmoment herangezogen werden kann. Eine solche Messung kann auch für weitere Aufgaben, z. B. Regelung und Steuerung verwendet werden.

Weitere Merkmale der Erfindung sind in der nachstehenden Beschreibung von Ausführungsbeispielen, auf welche die Erfindung jedoch keineswegs beschränkt ist, hervorgehoben.

Dabei zeigen die Figuren 1 bis 5 Längsschnitte von erfindungsgemäßen Taumelgetrieben und die Figuren 6 und 7 geben Federkennlinien wieder. Die Fig. 8 bis 11 zeigen zwei Ausführungsformen einer gelenklosen Anordnung.

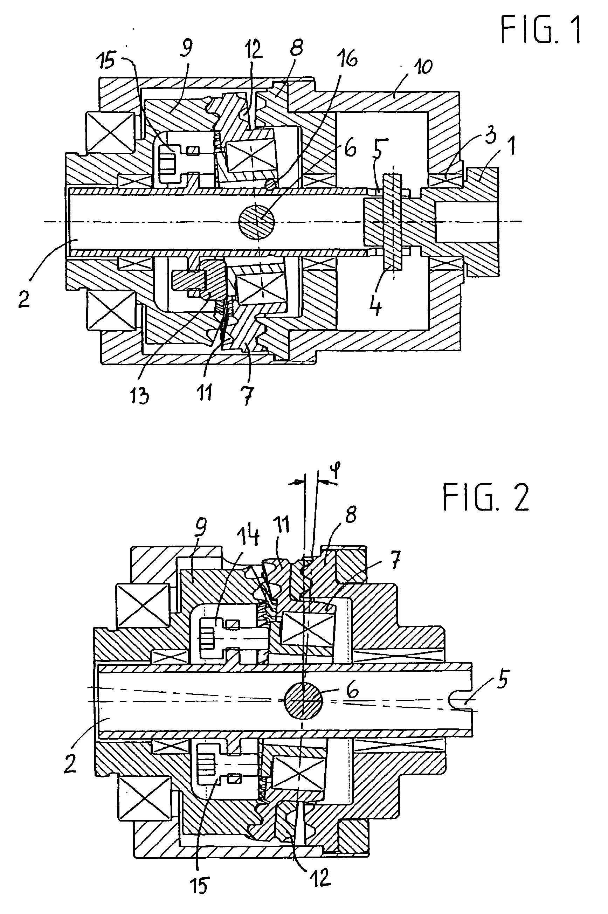

Gemäß Fig. 1 ist in einem Taumelgetriebe eine zweigeteilte Antriebswelle 1,2 angeordnet, wobei der erste Teil 1 der Antriebswelle über ein Lager 3 axial fixiert im Gehäuse 10 gelagert ist und der zweite Teil 2 der Antriebswelle axial verschiebbar mit dem ersten Teil 1 so verbunden ist, dass Drehmomente übertragbar sind. Die Verbindung zwischen den beiden Teilen 1 und 2 erfolgt beim gezeichneten Ausführungsbeispiel durch einen Bolzen 4, der in einer Nut 5 des Teiles 2 axial verschiebbar ist.

Auf dem axial verschiebbaren Teil 2 der Antriebswelle befindet sich ein Bolzen 6, der zyklisch mit der Antriebswelle 1,2 mitrotiert. Ein Taumelkörper 7 ist auf diesem Bolzen 6 befestigt und bildet mit der Achse der Antriebswelle 1,2 einen Winkel, den Taumelwinkel ϕ. Der Taumelkörper 7 liegt in der Mitte zwischen einem feststehenden Kegelrad 8 und einem als Abtriebswelle fungierenden Kegelrad 9. Das feststehende Kegelrad 8 ist mit dem Gehäuse 10 drehsteif verbunden, im gezeichneten Fall über einen Formschluss.

Der Taumelkörper 7 ist auf beiden Seiten mit je einem Zahnkranz 11 und 12 versehen, welche Zahnkränze 11 und 12 mit den Kegelrädern 8 und 9 zusammenarbeiten.

Gemäß der Erfindung soll der Winkel zwischen dem Taumelkörper 7 und der Antriebswelle 1,2 aktiv oder passiv verändert werden. Dadurch soll ein spielfreies Getriebe erhalten werden.

Durch die Verschwenkung des Taumelkörpers 7 werden die Zahnkränze 11 und 12 des Taumelkörpers 7 auf beiden Seiten in die korrespondierenden Verzahnungen der Kegelräder 8 und 9 gedrückt. Die jeweils im Eingriff stehenden Zahnflanken der korrespondierenden Zahnräder kontaktieren daher auf beiden Seiten eines Zahnes, wodurch das Zahnspiel zwischen den Zahnflanken des Räderpaares gegen null geht. Diese Verschwenkung des Taumelkörpers 7 kann (und soll natürlich auch) als Kompensation für die in einer Produktion auftretenden allgemeinen Fertigungstoleranzen herangezogen werden, um das Zahnspiel an den Eingriffspunkten der Zähne der Zahnräder 8,9 bzw. 11,12 im Getriebe zu minimieren oder ganz zu unterbinden. Wird der Taumelkörper 7 in die andere Schwenkrichtung gedreht (Verkleinerung des Taumelwinkels ϕ), geraten die Zahnflanken außer Kontakt. Dies bewirkt ein Auskuppeln des Taumelkörpers 7 und damit ein Auskuppeln der Abtriebswelle (Kegelrad 9), wodurch sich als Zusatzeffekt ein Kupplungsmechanismus ergibt. Dieses eben genannte Verschwenken des Taumelkörpers 7 in die entgegengesetzte Richtung kann sowohl durch gezielte Nutzung der passiven Zahnkräfte, als auch durch aktive Beeinflussung mittels eines Mechanismus erfolgen. Zweck dieser Zusatzfunktion ist ein Auskuppeln ohne Last oder unter Last. Ebenso ist diese Funktion als Überlastschutz unter Last nutzbar. Zudem kann die Änderung des Schwenkwinkels ϕ oder der Schwenkwinkel selbst als Maß für die intern auftretenden Zahnkräfte gewertet werden, welche gegen ein elastisches Element 13 (oder die Eigenelastizität der gesamten Anordnung) arbeiten. Durch die Messung dieses Schwenkwinkels ϕ oder die Messung der Änderung des Schwenkwinkels ϕ liegt ein Messwert vor, der als Maß für das im Getriebe übertragene Drehmoment herangezogen werden kann. Die Messung kann für weitere Aufgaben (Regelung, Steuerung, ...) herangezogen werden.

Bei den Ausführungsbeispielen nach den Fig. 1 und 2 wird der Taumelkörper 7 durch eine Inbusschraube 14 oder durch das elastische Element 13 (Fig. 1) in die gewünschte Position gedrückt. Die Endposition kann durch einen Anschlag behindert werden, um eine gewünschte Zahnluft einzustellen, z.B. um eine erwünschte Leichtgängigkeit des Getriebes oder ein erwünschtes Spiel im Abtrieb zu erreichen. Dieser Anschlag wird durch eine Inbusschraube 15 (Fig. 1 und 2) gebildet.

Gemäß Fig. 1 kann auch ein in einer Nut liegendes Segment 16 vorgesehen sein, das die Kippbewegung nach einem kleineren Kippwinkel behindert. Dadurch wird unter Momentenbelastung das Herauskippen des Taumelkörpers 7 verhindert.

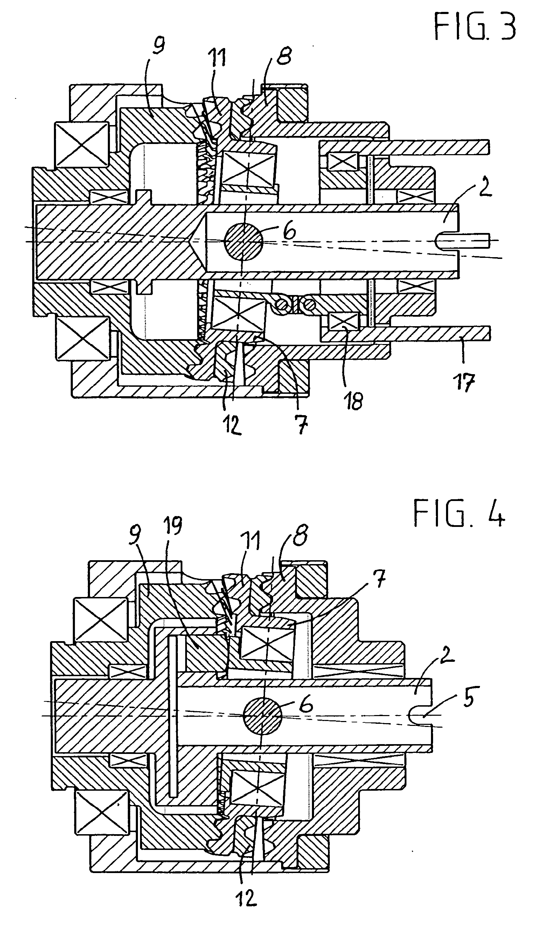

In Fig. 3 ist ein Ausführungsbeispiel zur aktiven Steuerung des Winkels ϕ des Taumelkörpers 7 dargestellt. Mittels eines Zugorganes 17 wird ein Lager 18 axial verschoben, dessen Innenring mit dem verschwenkbaren Taumelkörper 7 verbunden ist. Durch axiale Verschiebung des Gestänges 17 kann der Taumelwinkel ϕ direkt gesteuert werden.

Gemäß Fig.4 kann die Änderung des Taumelwinkels ϕ auch durch eine hydraulische oder pneumatische Stelleinrichtung erfolgen. In dieser Anordnung drückt ein Kolben 19, der in einer zylindrischen Bohrung geführt wird, auf den Taumelkörper 7 und dieser kippt in die Gegenverzahnung. Die Beaufschlagung des Kolbens 19 erfolgt dabei über den Teil 2 der Antriebswelle.

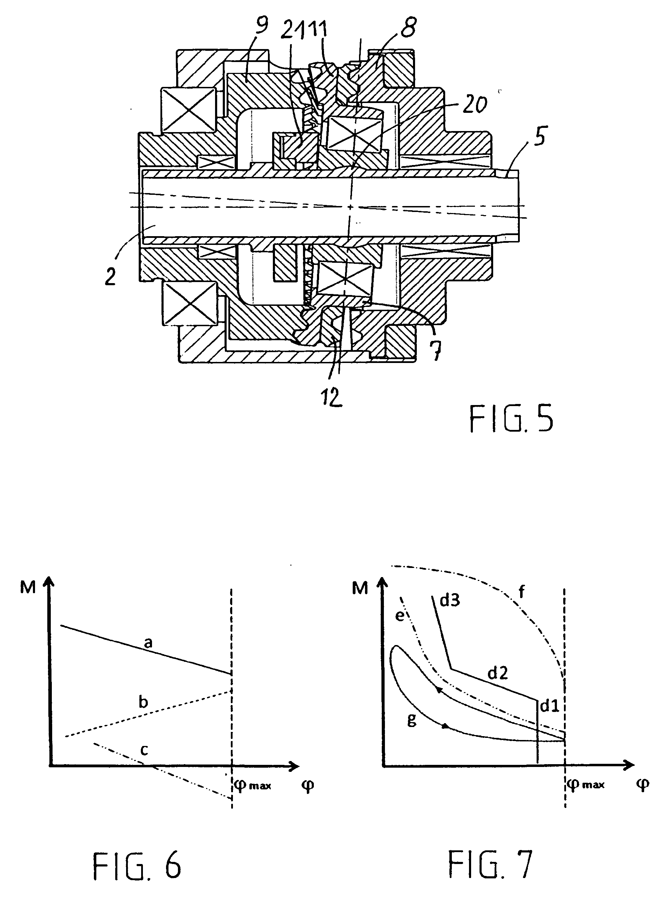

Beim Ausführungsbeispiel nach Fig. 5 ist der Taumelkörper 7 auf einem elastischen Element 20 gelenkig gelagert. Dieses könnte gleichzeitig die Winkelbeweglichkeit um die Taumelachse als auch die Federwirkung kombinieren. Anschlagelemente 21 können zusätzlich zur Erhöhung des Anpressdruckes oder zur Definition von Endanschlägen für beide Kipprichtungen eingebaut werden. Diese können als separate Elemente in das Getriebe eingebracht werden.

Wird das elastische Element 20 beispielhaft durch ein Elastomer gebildet, so ergeben sich zusätzliche Bewegungsmöglichkeiten des Taumelkörpers 7 in radialer und axialer Richtung. Diese Bewegungsmöglichkeiten können dazu benutzt werden, den Wirkungsgrad zu verändern und damit eine Selbsthemmung des Getriebes zu ermöglichen.

Auf den Taumelkörper 7 wirken auf beiden Seiten (diagonal gegenüber) Zahnkräfte, die proportional zum aufgebrachten Abtriebsdrehmoment sind. Diese Zahnkräfte verursachen am elastischen Element 20 eine Verschiebung des Taumelkörpers 7 in radialer oder axialer Richtung. Durch diese Verschiebung ändert sich auch die (exakte) Abrollkinematik des Taumelgetriebes, das Taumelzentrum des Taumelkörpers 7 ist nicht mehr die gedachte Kegelspitze der Kegelräder 8,9, sondern ein undefiniertes Taumelzentrum. Dadurch kommt es zwischen den in Kontakt stehenden Zahnflanken zu zusätzlichen parasitären Zahnkräften, die nicht an der Drehmomentübertragung beteiligt sind. Es kann zur Verklemmung der Zahnflanken und dadurch zu einer erheblichen Verminderung des Getriebe-Gesamtwirkungsgrades kommen, sodass auch Selbsthemmung eintreten kann.

In den Fig. 6 und 7 sind die Kennlinien von möglichen elastischen Elementen 13, 20, 22, 23 dargestellt, und zwar ist der Verlauf des Momentes, das auf den Taumelkörper wirkt, in Abhängigkeit vom Taumelwinkel ϕ aufgetragen.

Kurve a: Der Taumelkörper 7 wird in der maximal möglichen Endstellung (Taumelwinkel ϕ max) mit einer Vorspannung in die Verzahnung gedrückt. Dadurch ist auch bei Lastfreiheit des Getriebes eine Spielfreiheit garantiert. Bei steigendem Moment M (Verringerung des Taumelwinkels ϕ) steigt die Federkraft an.

Kurve b: Der Anstieg der Federkraft ist in diesem Falle degressiv. Beim Überschreiten einer Maximallast kippt der Taumelkörper 7 gänzlich aus dem Eingriff und kuppelt die

Verzahnung aus. Dies kann als Sicherheitsfunktion benutzt werden. Ein Vorteil dabei ist, dass der Kupplungsablauf sehr plötzlich passiert und die Verzahnung geschont wird.

Kurve c: Der Taumelkörper 7 besitzt eine Neutralstellung, die nicht der maximalen Kippstellung entspricht. Durch das Verändern des Winkels, bei dem der Momenten-Nulldurchgang stattfindet, kann das Zahnspiel beeinflusst und eingestellt werden.

Kurve d: Die Momentencharakteristik besteht aus zusammengesetzten Kennlinien. Dies ist der allgemeine Fall. Dadurch kann das Verhalten des Getriebes gezielt beeinflusst werden. Das Kennliniensegment d1 zeigt einen harten mechanischen Anschlag im Getriebe, das zur Einstellung einer minimalen Zahnluft verwendet werden kann. Das Kennliniensegment d3 zeigt einen im Vergleich zu d1 weicheren Anschlag im Getriebe, der zum Beispiel ein vollständiges Auskuppeln der Verzahnung auch unter großer Last behindert.

Kurve e: Sie zeigt den allgemeinen Fall eines exponentiellen Momentenverlaufes. Hier kann ein moderater Übergang geschaffen werden zwischen der spielfreien Leichtgängigkeit des Getriebes ohne Last und der Möglichkeit, auch große Kräfte im Getriebe übertragen zu können. Der Wirkungsgrad kann dadurch bei kleinen Lasten vergrößert werden.

Kurve f: Ebenso wie bei Kurve e kann eine kontinuierliche, aber degressive Kennlinie verwendet werden. Mögliche Vorteile dabei: Das Getriebe hat schon bei kleinen Lasten ein spielfreies steifes Übertragungsverhalten, das maximal mögliche Moment ist aber begrenzt.

Kurve g: Ebenso ist es möglich, eine Hysterese in die Kennlinie einzubauen. Dies kann zum Beispiel mit Elastomeren oder reibungsbehafteten Elementen erfolgen. Als Vorteil dieser Konfiguration ist zu nennen, dass das Einkuppeln (nach einem vorherigen Auskuppeln) sehr sanft erfolgt. Dies dient der Schonung der Verzahnung.

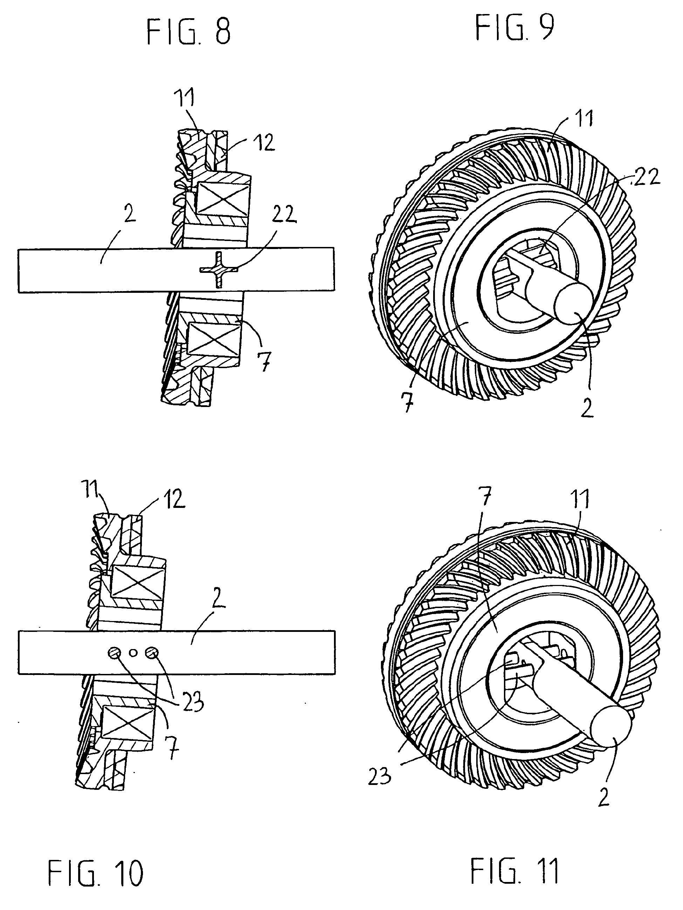

Die Fig. 8 und 9 zeigen eine Anordnung der Antriebswelle 2 sowie des Taumelkörpers 7 mit einer weiteren federnden Lagerung. Alle weiteren Getriebeelemente sind nicht dargestellt.

Eine kreuzartig ausgebildete Blattfeder 22 ist fix sowohl mit der Antriebswelle 2 als auch mit dem Taumelkörper 7 verbunden. Die Verbindung zwischen der Antriebswelle 2 und der Blattfeder 22, sowie zwischen der Blattfeder 22 und dem Taumelkörper 7 ist kraft- oder formschlüssig ausführbar. Sie kann aus einem oder mehreren Teilen bestehen. Diese Form einer kreuzartigen Blattfeder 22 kann die erforderlichen Drehfederkräfte erzeugen. Ein Einbau des Taumelkörpers 7 unter Vorspannung der Blattfeder 22 ist möglich.

Gleichzeitig ist diese Anordnung steif gegen axiale oder sonstige Verschiebungen. Damit kann ein Drehgelenk gut nachgebaut werden. Die erforderliche Drehweichheit ist gegeben.

Die Fig. 10 und 11 zeigen eine ähnliche Anordnung. Hier werden durch zwei Federdrähte 23 die Federungseigenschaften erreicht. Wiederum ist ein Verdrehen des Taumelkörpers 7 möglich, ein Verschieben in irgendeine Richtung ist kaum möglich.

Wesentlich ist, dass die Spielfreiheit auch durch gelenklose Anordnungen erreicht werden kann, welche ein Verkippen des Taumelkörpers 7 auf der Eingangswelle ermöglichen. Zusätzlich kann dies in Kombination mit einer durch diese Anordnung erzeugten, auf den Taumelkörper 7 wirkenden Federkraft gemacht werden.

Im Rahmen der Erfindung sind zahlreiche Abänderungen möglich. So könnte die Verbindung der Teile 1 und 2 z.B. durch einen Balg erfolgen.

## Patentansprüche

1. Taumelgetriebe, dessen auf einer Antriebswelle (1, 2) angeordneter Taumelkörper (7) mit wenigstens einer Reihe von Kraftübertragungselementen, insbesondere Zahnkränzen (11, 12) versehen ist, die mit eingangsseitig und ausgangsseitig angeordneten sekundären Kraftübertragungselementen, insbesondere Zahnkränzen (8, 9) zusammenwirken, **dadurch gekennzeichnet, dass** die Antriebswelle (1, 2) geteilt ist, wobei der erste Teil (1) der Antriebswelle (1, 2) über ein Lager (3) axial fixiert in einem Gehäuse (10) gelagert ist und der zweite Teil (2) der Antriebswelle (1, 2) axial verschiebbar mit dem ersten Teil (1) so verbunden ist, dass Drehmomente übertragbar sind, ferner der Taumelkörper (7) auf dem axial verschiebbaren Teil (2) der Antriebswelle (1, 2) angeordnet ist und der Winkel (ϕ) zwischen dem Taumelkörper (7) und der Antriebswellenachse veränderbar ist.

2. Taumelgetriebe nach Anspruch 1, **dadurch gekennzeichnet, dass** der Taumelkörper (7) auf einer die Antriebswelle (1, 2) quer durchsetzenden, als Bolzen (6) ausgebildeten Gelenksachse gelagert ist.

3. Taumelgetriebe nach Anspruch 1, **dadurch gekennzeichnet, dass** der Taumelkörper (7) über ein elastisches Element (20) auf der Antriebswelle (1, 2) gelagert ist.

4. Taumelgetriebe nach einem der Ansprüche 1 bis 3, **dadurch gekennzeichnet, dass** ein im Sinne einer Verschwenkung des Taumelkörpers (7) wirkendes Schwenkglied (13,14,15,16,17,19) angeordnet ist.

5. Taumelgetriebe nach Anspruch 4, **dadurch gekennzeichnet, dass** das Schwenkglied eine Schraube (14, 15) ist.

6. Taumelgetriebe nach Anspruch 4, **dadurch gekennzeichnet, dass** das Schwenkglied ein Anschlagelement (16), z.B. ein in einer Nut liegendes Segment (16) ist.

7. Taumelgetriebe nach Anspruch 4, **dadurch gekennzeichnet, dass** das Schwenkglied ein etwa parallel zur Antriebswellenachse wirkendes Zugorgan ist (17), das am Taumelkörper (7) angreift.

8. Taumelgetriebe nach Anspruch 4, **dadurch gekennzeichnet, dass** das Schwenkglied ein hydraulisch oder pneumatisch betätigtes Element oder ein Kolben (19) ist, der am Taumelkörper (7) angreift.

9. Taumelgetriebe nach nach Anspruch 3 oder einem der Ansprüche 4 bis 8 wenn abhängig von Anspruch 3, **dadurch gekennzeichnet, dass** das elastische Element eine kreuzartige Blattfeder (22) ist.

10. Taumelgetriebe nach Anspruch 3 oder einem der Ansprüche 4 bis 8 wenn abhängig von Anspruch 3, **dadurch gekennzeichnet, dass** das elastische Element aus Drahtfedern (23) besteht.

## Claims

1. A wobble transmission, whose wobble body (7) arranged on a driveshaft (1, 2) is provided with at least one series of force transmission elements, in particular gear rims (11, 12), which interact with secondary force transmission elements arranged on the input side and on the output side, in particular gear rims (8, 9), **characterized in that** the driveshaft (1, 2) is divided, wherein the first part (1) of the driveshaft (1, 2) is mounted axially fixed in a housing (10) via a bearing (3) and the second part (2) of the driveshaft (1, 2) is connected axially displaceably to the first part (1) so that torques can be transmitted, furthermore, the wobble body (7) being arranged on the axially displaceable part (2) of the driveshaft (1, 2) and the angle (ϕ) between the wobble body (7) and the driveshaft axis being changeable.

2. The wobble transmission according to Claim 1, **characterized in that** the wobble body (7) is mounted on an articulated axle transversely penetrating the driveshaft (1, 2) that is designed as a bolt (6).

3. The wobble transmission according to Claim 1, **characterized in that** the wobble body (7) is mounted on the driveshaft (1, 2) via an elastic element (20).

4. The wobble transmission according to any one of the Claims 1 to 3, **characterized in that** a pivot link (13, 14, 15, 16, 17, 19) acting in the sense of a pivoting on the wobble body (7) is arranged.

5. The wobble transmission according to Claim 4, **characterized in that** the pivot link is a screw (14, 15).

6. The wobble transmission according to Claim 4, **characterized in that** the pivot link is a stop element (16), e.g. a segment (16) lying in a groove.

7. The wobble transmission according to Claim 4, **characterized in that** the pivot link is a pulling organ (17) acting approximately parallel to the driveshaft axis, which acts on the wobble body (7).

8. The wobble transmission according to Claim 4, **characterized in that** the pivot link is a hydraulically or pneumatically actuated element or a piston (19), which acts on the wobble body (7).

9. The wobble transmission according to Claim 3 or any one of the Claims 4 to 8 if dependent on Claim 3, **characterized in that** the elastic element is a cross-like leaf spring (22).

10. The wobble transmission according to Claim 3 or any one of the Claims 4 to 8 if dependent on Claim 3, **characterized in that** the elastic element consists of wire springs (23).

## Revendications

1. Mécanisme oscillant dont un corps oscillant (7) monté sur un arbre d'entraînement (1, 2) est muni d'au moins une série d'éléments de transmission de force, en particulier des couronnes dentées (11, 12) qui coopèrent avec des éléments de transmission de force secondaires disposés en entrée et en sortie, en particulier des couronnes dentées (8, 9), **caractérisé en ce que** l'arbre d'entraînement (1, 2) est divisé, la première partie (1) de l'arbre d'entraînement (1, 2) étant montée dans un carter (10) fixé axialement sur un palier (3) et la deuxième partie (2) de l'arbre d'entraînement (1, 2) étant reliée axialement mobile avec la première partie (1) de sorte que les couples sont transmissibles, le corps oscillant (7) étant en outre disposé sur la partie (2) axialement mobile de l'arbre d'entraînement (1, 2) et l'angle (ϕ) entre le corps oscillant (7) et l'axe de l'arbre d'entraînement étant modifiable.

2. Mécanisme oscillant selon la revendication 1, **caractérisé en ce que** le corps oscillant (7) est monté sur un axe d'articulation constitué comme un boulon (6) traversant transversalement l'arbre d'entraînement (1, 2).

3. Mécanisme oscillant selon la revendication 1, **caractérisé en ce que** le corps oscillant (7) est monté sur l'arbre d'entraînement (1, 2) par un élément élastique (20).

4. Mécanisme oscillant selon une quelconque des revendications 1 à 3, **caractérisé en ce qu'**un élément pivotant (13, 14, 15, 16, 17, 19) est monté agissant au sens d'un pivotement du corps oscillant (7).

5. Mécanisme oscillant selon la revendication 4, **caractérisé en ce que** l'élément pivotant est une vis (14, 15).

6. Mécanisme oscillant selon la revendication 4, **caractérisé en ce que** l'élément pivotant est un élément de butée (16), par ex. : un segment (16) situé dans une rainure.

7. Mécanisme oscillant selon la revendication 4, **caractérisé en ce que** l'élément pivotant est un organe de traction (17) agissant à peu près parallèlement à l'axe de l'arbre d'entraînement, qui vient en prise sur le corps oscillant (7).

8. Mécanisme oscillant selon la revendication 4, **caractérisé en ce que** l'élément pivotant est un élément ou un piston (19) à commande hydraulique ou pneumatique, qui vient en prise sur le corps oscillant (7).

9. Mécanisme oscillant selon la revendication 3 ou une quelconque des revendications 4 à 8, si dépendantes de la revendication 3, **caractérisé en ce que** l'élément élastique est un ressort à lames (22) de type cruciforme.

10. Mécanisme oscillant selon la revendication 3 ou une quelconque des revendications 4 à 8, si dépendantes de la revendication 3, **caractérisé en ce que** l'élément élastique est fait de ressorts à boudin (23).
